# EUROPEAN PATENT APPLICATION

(11) **EP 2 163 406 A1**
(43) Date of publication of application: **17.03.2010**
(21) Application number: 09012087.4
(22) Date of filing: 01.04.2005
(51) Int. Cl.: B60C 13/00

(54) **Use of colored indicia on tires as a designator**

(30) Priority: 12.04.2004 US 822631
(62) Divisional of application: 05731256.3
(71) Applicant: Bridgestone Firestone North American Tire, LLC, Nashville, TN 37214 (US)
(72) Inventor: Speyer, Al, Hendersonville Tennessee 37075 (US); Shrieve, Edward, Suffield Ohio 44260 (US); George, Anton, Indianapolis Indiana 46260 (US); Byrne, Francis, Medina, Ohio 44256-8657 (US)
(74) Representative: Whalley, Kevin

(57) **Abstract**

A tire for use on a racing vehicle, the tire having a sidewall, the tire comprising:
a color marking disposed on the sidewall of the tire, the color marking being configured to be visibly detected by a racing audience to convey race-related information to the racing audience.

## Description

### Background

For many years, tire manufacturers have placed indicia (i.e., letters, numerals, characters, symbols, trademarks or similar designations and descriptions) upon the sidewalls of tires for informational and identification purposes. For example, such indicia may take a variety of forms and convey information relative to the tire manufacturer, the brand name of the tire, the tire size, its construction and load limits, the quality grade thereof, sizes, mounting instructions, safety warnings, as well as the place and date of its manufacture.

Moreover, tires having decorative sidewalls, including color, are well known and can enhance the appearance and, thus, the marketability of the tires. For example, tires having a colored annular ring that extends around the sidewall of the tire (e.g., "white wall" tires) are known in the art and are used for decorative purposes.

### Brief Description Of The Drawings

In the accompanying drawings which are incorporated in and constitute a part of the specification, embodiments of a mechanism and method are illustrated which, together with the detailed description given below, serve to describe example embodiments of the mechanism and method. It will be appreciated that the illustrated boundaries of elements (e.g., boxes or groups of boxes) in the figures represent one example of the boundaries. One of ordinary skill in the art will appreciate that one element may be designed as multiple elements or that multiple elements may be designed as one element. An element shown as an internal component of another element may be implemented as an external component and vice versa.

Further, in the accompanying drawings and description that follow, like parts are indicated throughout the drawings and description with the same reference numerals, respectively. The figures are not drawn to scale and the proportions of certain parts have been exaggerated for convenience of illustration.

**Figure 1** illustrates an elevational view of a conventional tire 100.

**Figure 2** illustrates an elevational view of one embodiment of a pair of tires **200** configured to indicate right and left side installation on a racing vehicle.

**Figure 3** illustrates one embodiment of a methodology **300** associated with changing a tire during a vehicle race.

**Figure 4** illustrates an elevational view of one embodiment of a tire **400** configured to convey information to a racing audience.

**Figure 5** illustrates one embodiment of a methodology **500** associated with conveying race-related information to a racing audience during a race of vehicles.

### Detailed Description

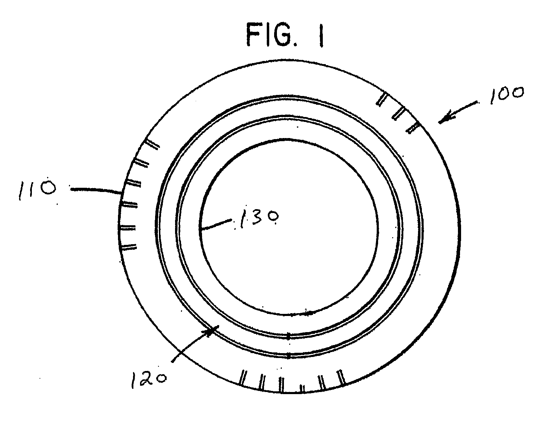

**Figure 1** illustrates an elevational view of a conventional tire **100.** The tire **100** is provided with a tread area **110,** an outer sidewall area **120,** and an outer bead **130.** By "outer," it is understood to mean the side of the tire **100** that is visible when mounted upon a vehicle. It will be appreciated that all tires also have an inner sidewall (not shown) and an inner bead (not shown). The outer bead **130** defines an opening for receiving a wheel (not shown) and the outer sidewall **120** extends between and joins the tread area **110** and the outer bead **130.**

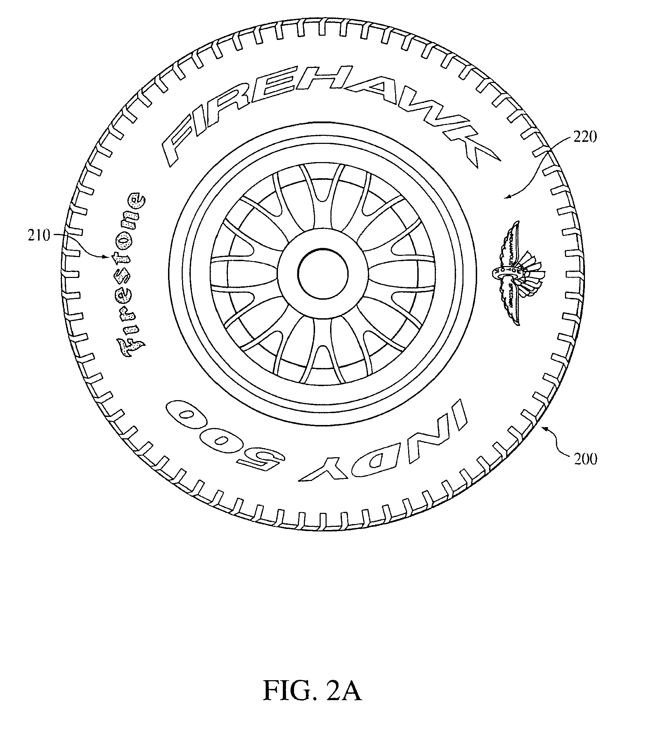

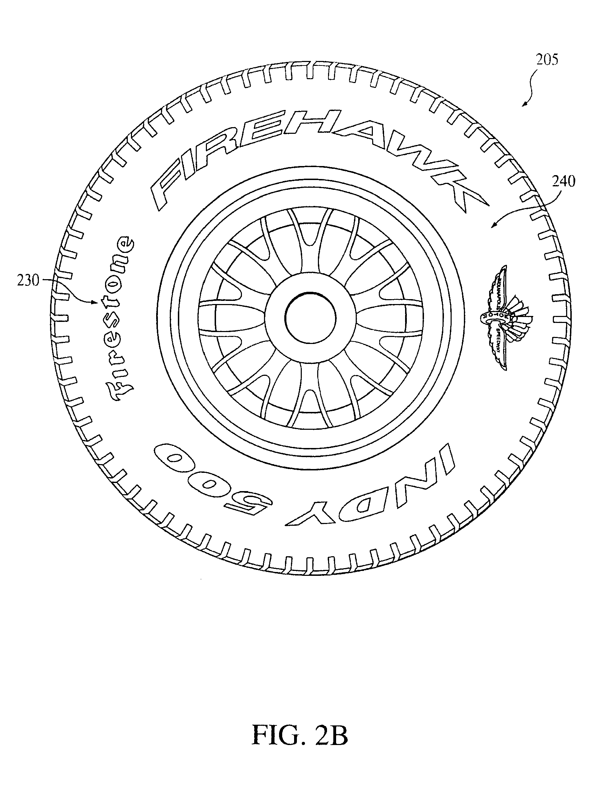

**Figure 2** illustrates an elevational view of one embodiment of a kit or pair of tires **200, 205** configured to indicate right and left side installation on a racing vehicle. In other words, the pair of tires **200, 205** can include indicia or markings provided thereon to indicate to a tire changer or other individual that one of the tires is to be mounted on a right side of the racing vehicle and the other tire is to be mounted on a left side of the racing vehicle. For example, as shown in **Figure 2****,** a first tire **200** can include first indicia **210** provided on an outer sidewall **220** of the first tire **200,** while a second tire **205** can include second indicia **230** provided on an outer sidewall **240** of the second tire **205.** Alternatively, the indicia or markings can be provided on a different portion of the tire (e.g., the tread area or the inner sidewall) or even the rim or wheel that supports the tire.

In one embodiment, the first and second indicia **210, 230** can include a high visibility marking such as a company name or logo as shown in **Figure 2****.** By "high visibility marking," it is understood to mean that the markings are quickly identifiable and recognizable at a glance to permit a tire changer to confirm that a selected tire to be mounted on a certain side of the racing vehicle is the correct tire since time is of the essence for a tire change during a race. Accordingly, the high visibility markings should be sufficiently large enough to permit such a quick visual confirmation. Other than company names or logos, it will be appreciated that the first and second indicia **210, 230** can include letters, numerals, characters, shapes, ornamental designs, decorative patterns, trademarks, or any combination thereof.

To indicate right and left side installation, the first and second indicia **210, 230** on the tires **200, 205,** respectfully, can differ in color. For example, the color of the first indicia **210** can be "red" to designate right side installation and the color of the second indicia **230** can be "white" to designate left side installation. Obviously, the first and second indicia **210, 230** can be any two different colors so long as there is a visible difference between the two colors. By providing a high visibility marking on the tires **200, 205,** the tire changer can quickly check and confirm that the tires **200, 205** are being applied to the racing vehicle correctly. It will be appreciated that the colors of the first and second indicia **210, 230** should be sufficiently different than the color of the sidewalls of the tires **200, 205** to provide a visual contrast between the indicia and the sidewalls. It will also be appreciated that the first and second indicia **210, 230** on the tires **200, 205** can be the same color, but differ in size to indicate right and left side installation.

In an alternative embodiment, the first and second indicia **210, 230** on the first and second tires **200, 205,** respectively, can include different letters, numerals, characters, shapes, ornamental designs, decorative patterns, or trademarks to indicate right and left side installation. For example, the first indicia **210** provided on the first tire **200** can include one set of letters (e.g., the word "RIGHT"), while the second indicia provided on the second tire **205** can include a different set of letters (e.g., the word "LEFT"). In another embodiment, the first and second indicia **210, 230** on the tires **200, 205,** respectively, can include one or more spaced-apart arcuate segments or stripes that extend around at least a portion of the circumference of the outer sidewalls **220, 240** of the tires **200, 205,** respectively, that differ in thickness to indicate right and left side installation. For example, a thicker segment or stripe can indicate right side installation, while a thinner segment or stripe can indicate left side installation.

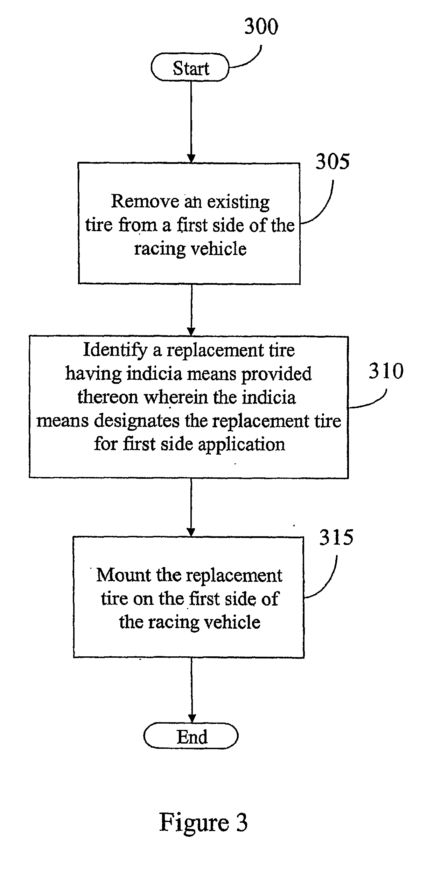

Illustrated in **Figure 3** is one embodiment of a methodology associated with changing a tire during a vehicle race. The illustrated elements denote "processing blocks" and represent functions and/or actions taken for changing a tire during the vehicle race. It will be appreciated that the methodology may involve dynamic and flexible processes such that the illustrated blocks can be performed in other sequences different than the one shown and/or blocks may be combined or, separated into multiple components. The foregoing applies to all methodologies described herein.

With reference to **Figure 3**, the process **300** involves a tire changing process. The tire changing process can be accomplished by an individual or group of individuals (e.g., one or more tire changers in a pit crew). The process **300** can include removing an existing tire from a first side of the racing vehicle (block **305**). A replacement tire, having indicia disposed thereon that indicates the replacement tire is to be mounted on the first side of the racing vehicle, can then be identified (block **310**)**.** Finally, the replacement tire can be mounted onto the first side of the racing vehicle (block **315**).

Optionally, the process **300** can further include changing a tire from a second side of the racing vehicle. For example, the process can include removing an existing tire from a second side of the racing vehicle. A replacement tire, having indicia disposed thereon that indicates that the replacement tire is to be mounted on the second side of the racing vehicle, can then be identified. Finally, the replacement tire can be mounted onto the second side of the racing vehicle.

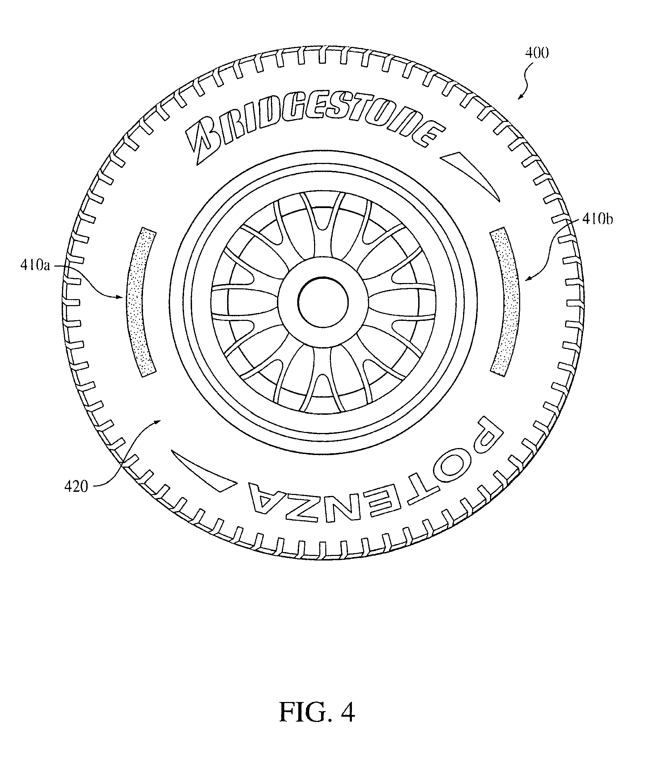

**Figure 4** illustrates an elevational view of one embodiment of a tire **400** configured to convey information to a racing audience (e.g., the in-person spectators and/or the television audience). In other words, the tire **400** can include colored indicia or markings that the racing audience can visibly detect to provide the audience with race-related information. For example, the tire **400** can include colored indicia **410** provided on an outer sidewall **420** of the tire **400.**

In one embodiment, the colored indicia **410** can be two spaced-apart arcuate segments or stripes **410a, 410b.** As shown in **Figure 4**, the arcuate segments **410a, 410b** can extend around at least a portion of the circumference of the outer sidewall **420.** It will be appreciated that the colored indicia **410** can include one or more than two spaced-apart arcuate segments extending around the circumference of the tire **400.** Optionally, the colored indicia **410** can be a solid annular ring that extends around the entire circumference of the tire **400.** Although spaced-apart arcuate segments **410a**, **410b** are illustrated in **Figure 4****,** it will also be appreciated that the colored indicia **410** can be letters, numerals, characters, shapes, ornamental designs, decorative patterns, trademarks, logos, or any combination thereof.

In one embodiment, the color of the colored indicia **410** can be "red." However, it will be appreciated that the colored indicia **410** can be any color other than "red" so long as there is a sufficient visible contrast between the colored indicia **410** and the outer sidewall **420** of the tire **400** to enable the racing audience to visibly detect the colored indicia from a distance while the tire **400** is rotating during the race. It will be appreciated that the two red spaced-apart arcuate segments **410a, 410b** will resemble a red ring as viewed by the racing audience when the tire **400** is rotating during the race.

In one embodiment, the colored indicia **410** on the tire **400** can indicate to the racing audience that the tire **400** mounted on the racing vehicle is constructed of a particular rubber compound. For example, before a racing event, racing promoters can inform the prospective racing audience that a "special" type of tire may be used during the race. The "special" type of tire may be constructed of a different rubber compound than the regular tires (e.g., a softer rubber compound to improve grip). The racing promoters can inform the prospective racing audience that the "special" tires will have colored indicia on the outer sidewall designating the tires as "special." Thus, when the racing audience visibly detects the racing vehicles with the colored indicia on its tires during the race, the racing audience will know that the racing vehicle is using the "special" tires. It will be appreciated that the colored indicia can convey other information to the racing audience about the type of tire used on the racing vehicle (e.g., hard compound tire, rain tire, tread pattern, etc.).

In another embodiment, the colored indicia **410** on the tire **400** can indicate to the racing audience that the driver of the racing vehicle having these tires **400** mounted thereon is a points leader of a vehicle racing series or has the pole position for a certain vehicle race. For example, before each race, the prospective racing audience can be informed that the vehicle in the race having certain colored indicia provided on its tires is the points leader of the vehicle racing series or the pole position holder of that particular racing event. Thus, when the racing audience visibly detects the racing vehicle having the colored indicia on its tires during the race, the racing audience will know that the driver of the racing vehicle is the points leader for the racing series and/or the pole position holder of the race.

It will be appreciated that the colored indicia **410** provided on the tire **400** can also convey information to the pit crew. For example, if one of the regulations of a race requires that a set of the "special" tires be used at least once during the race, the pit crew can quickly confirm that the "special" tires were used during the race through the visible detection of the colored indicia on the tires.

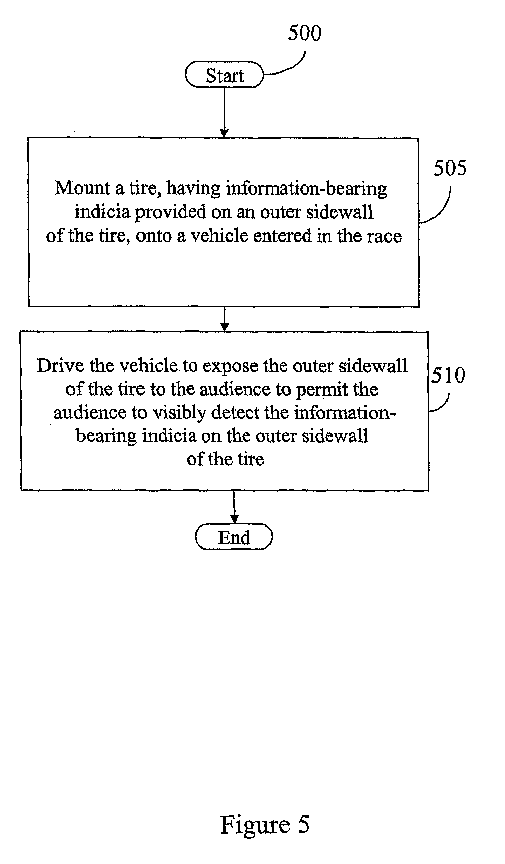

Illustrated in **Figure 5** is one embodiment of a methodology associated with conveying race-related information to a racing audience during a race of vehicles along a track. The process **500** can include mounting a tire onto a vehicle entered in the race wherein the tire has information-bearing indicia provided on an outer sidewall of the tire (block 505). The vehicle can then be driven along the track to expose the outer sidewall of the tire to the racing audience thereby permitting the audience to visibly detect the information-bearing indicia on the outer sidewall of the tire (block **510**).

The indicia and markings described above can be applied to the tires utilizing any of a variety of existing technologies. Suitable technologies to apply indicia or markings to a sidewall of a tire after cure include, but are not limited to: 1) thermal transfer or lamination processes such as the process described in U.S. Patent No. 5,047,110, which is hereby incorporated by reference in its entirety herein; 2) adhesive bonding processes where a decal is affixed to the sidewall of a tire with an adhesive such as the process described in U.S. Patent No. 5,300,164, which is hereby incorporated by reference in its entirety herein; 3) ink jet printing technologies; and 4) other printing and/or painting processes. Although the indicia or markings can be applied before or after cure of the tire, an advantage in applying the indicia or markings to the tires after cure is that the tire manufacturer is free to make essentially one group of master tires and then apply different indicia or markings to them.

In an alternative embodiment, the rims or wheels of the racing vehicle may include colored indicia to indicate the points leader of a vehicle racing series or the pole position holder. In one embodiment, the rims of the racing vehicle may be a different color than the rims of the rest of the racing field to indicate the points leader of a vehicle racing series and/or the pole position holder. For example, the points leader and/or pole position holder can have gold wheels while the rest of the racing field has black or silver wheels.

The colored indicia described above can be applied to the rims utilizing any of a variety of existing technologies. Suitable technologies to apply colored indicia to a rim include, but are not limited to: 1) plating processes to plate the entire rim or a portion thereof (e.g., chrome plating, gold plating, etc.); 2) painting processes to paint the entire rim or a portion thereof; 3) inkjet processes or other printing processes to print colored indicia on the rim; and 4) adhesive bonding processes where a decal can be affixed to the rim.

In one embodiment, the indicia or markings described above can be substantially permanent such that they are designed to last the duration of the race. However, it will be appreciated that the markings on the tires or rims indicating left or right installation may not need to be substantially permanent as they are likely more useful prior to and/or during the mounting of the tires onto the racing vehicle.

While the present invention has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the invention, in its broader aspects, is not limited to the specific details, the representative apparatus, and illustrative examples shown and described. Accordingly, departures may be made from such details without departing from the spirit or scope of the applicant's general inventive concept.

## Claims

1. A tire for use on a racing vehicle, the tire having a sidewall, the tire comprising:
a color marking disposed on the sidewall of the tire, the color marking being configured to be visibly detected by a racing audience to convey race-related information to the racing audience.

2. The tire of claim 1 wherein the color marking on the sidewall of the tire conveys to the racing audience that the tire on the racing vehicle is constructed of a certain rubber compound.

3. The tire of claim 1 wherein the color marking on the sidewall of the tire conveys to the racing audience that a driver of the racing vehicle is a points leader of a vehicle racing series.

4. The tire of claim 1 wherein the color marking on the sidewall of the tire conveys to the racing audience that a driver of the racing vehicle is a pole position holder of a racing event.

5. The tire of claim 1 wherein the color marking on the sidewall of the tire includes an arcuate segment.

6. The tire of claim 1 wherein the color marking on the sidewall of the tire includes multiple spaced-apart arcuate segments.

7. A method of providing race-specific information to an audience during a race of vehicles along a track, the method comprising the steps of:
mounting a tire onto a vehicle entered in the race, the tire having information-bearing indicia provided on an outer sidewall of the tire; and
driving the vehicle along the track to expose the outer sidewall of the tire to the audience thereby permitting the audience to visibly detect the information-bearing indicia on the outer sidewall of the tire.

8. The method of claim 7 wherein the information-bearing indicia is a colored stripe that extends around at least a portion of a circumference of the outer sidewall of the tire.

9. The method of claim 7 wherein the information-bearing indicia designates a type of rubber compound used to construct the tire.

10. The method of claim 7 wherein the information-bearing indicia designates a points leader of a vehicle racing series.

11. The method of claim 7 wherein the audience includes a television audience.

12. A tire for use on a racing vehicle, the tire having a sidewall, the tire comprising:
a high visibility color marking disposed on the sidewall of the tire wherein the color marking is configured to be used as a designator.

13. The tire of claim 12 wherein the color marking designates left or right side installation of the tire on the racing vehicle.

14. The tire of claim 12 wherein the color marking designates that the tire is constructed of a certain rubber compound.

15. The tire of claim 12 wherein the color marking designates a points leader of a vehicle racing series.
